# DEMANDE DE BREVET EUROPEEN

(11) **EP 1 839 544 A1**
(43) Date de publication de la demande: **03.10.2007**
(21) Numéro de dépôt: 07356039.3
(22) Date de dépôt: 29.03.2007
(51) Int. Cl.: A47J 37/08

(54) **Grille-pain**

(30) Priorité: 31.03.2006 FR 0602826
(71) Demandeur: SEB SA, 69130 Ecully (FR)
(72) Inventeur: Mangel, Christian, 88200 Saint Etienne Les Remiremont (FR); Valance, Nicolas, 88000 Epinal (FR)
(74) Mandataire: Kiehl, Hubert

(57) **Abrégé**

La présente invention concerne un grille-pain (1) comportant un bâti définissant au moins une chambre de chauffe ouverte en partie supérieure et délimitée en partie basse par une trappe mobile (50) entre une position fermant la chambre de chauffe et une position d'ouverture de la chambre de chauffe, des éléments chauffants disposés à proximité de la chambre de chauffe, un entraîneur (20) mobile hors de la chambre de chauffe entre une position haute de repos et une position basse de grillage du pain, la trappe étant en position fermée lorsque l'entraîneur est en position haute de repos correspondant à l'arrêt du grille-pain, l'entraîneur (20) comportant une extension (204, 206) permettant de fermer le circuit d'alimentation électrique des éléments chauffants via des moyens électroniques (300) lors du passage de sa position haute à sa position basse, caractérisé en ce que le grille-pain (1) comporte un électroaimant (24, 26) alimenté lors de la descente de l'entraîneur et s'opposant, lorsque alimenté, à l'ouverture de la trappe (50), et en ce qu'un circuit électronique commande l'arrêt de l'alimentation de cet électroaimant (24, 26) en fin de cycle de grillage afin de permettre le mouvement d'ouverture de la trappe (50) pour l'évacuation des tranches de pain par le bas du grille-pain (1).

## Description

La présente invention se rapporte au domaine technique des appareils électroménagers de type grille-pain, et plus particulièrement aux grille-pain dont la sortie du pain s'effectue par le bas du grille-pain.

Il est connu, par le document FR 2 871 041, un tel grille-pain où les tranches de pain sont introduites dans une chambre de chauffe par une fente en partie supérieure du grille-pain et dont la récupération des aliments grillés est réalisée par le dessous du grille-pain. Cette configuration nécessite une surélévation du corps de l'appareil au moyen de pieds, qui, dans ce document, sont repliables contre le boîtier de l'appareil, afin de réduire son encombrement

La sortie des aliments grillés s'effectue grâce à une trappe fermant la chambre de chauffe en partie basse et qui s'ouvre lorsque le temps de grillage est atteint.

Toutefois, une telle trappe doit rester ouverte pendant un temps suffisant pour que les tranches de pain puissent sortir de la chambre de chauffe sans être bloquées par la fermeture de la trappe. Le document US 5,522,306 propose une pièce animée d'un mouvement vertical à la fin du temps de grillage et venant provoquer, mécaniquement, la rotation d'un axe portant des doigts de retenue formant trappe, cette rotation étant réalisée pendant le temps d'interaction de la pièce avec ledit axe.

Une telle solution, purement mécanique, présente quelques inconvénients. En effet, l'ouverture de la trappe est liée à un mouvement vertical d'une pièce, sous l'effet d'une force de rappel d'un ressort. Cette pièce est liée à une manette d'actionnement montée en coulissement sur des colonnes verticales. La complexité de cette pièce peut amener des dysfonctionnements par coincement sur le trajet vertical, pouvant conduire au maintien en position fermée de la trappe. Par ailleurs, la durée d'ouverture de la trappe est liée à la durée d'interaction de la pièce avec l'axe de rotation de la trappe, dépendante de nombreux facteurs et qui ne peut présenter de valeurs importantes sans entraîner un dimensionnement des pièces qui ne serait pas compatible avec l'encombrement de l'appareil.

La présente invention vise à améliorer l'ouverture de la trappe en proposant, par un système simple, une ouverture systématique de la trappe pendant un temps contrôlé et ajustable.

La présente invention est atteinte à l'aide d'un grille-pain comportant un bâti définissant au moins une chambre de chauffe ouverte en partie supérieure et délimitée en partie basse par une trappe mobile entre une position fermant la chambre de chauffe et une position d'ouverture de la chambre de chauffe, des éléments chauffants disposés à proximité de la chambre de chauffe, un entraîneur mobile hors de la chambre de chauffe entre une position haute de repos et une position basse de grillage du pain, la trappe étant en position fermée lorsque l'entraîneur est en position haute de repos correspondant à l'arrêt du grille-pain, l'entraîneur comportant une extension permettant de fermer le circuit d'alimentation électrique des éléments chauffants via des moyens électroniques lors du passage de sa position haute à sa position basse, caractérisé en ce que le grille-pain comporte un électroaimant alimenté lors de la descente de l'entraîneur et s'opposant, lorsque alimenté, à l'ouverture de la trappe, et en ce qu'un circuit électronique commande l'arrêt de l'alimentation de cet électroaimant en fin de cycle de grillage afin de permettre le mouvement d'ouverture de la trappe pour l'évacuation des tranches de pain par le bas du grille-pain.

Ainsi, selon l'invention, l'ouverture de la trappe constituant le fond de la chambre de chauffe est assurée par un électroaimant piloté par un circuit électronique, permettant notamment de contrôler et de définir le moment précis d'ouverture de la trappe. Par ailleurs, la fiabilité reconnue de ce type de commande rend l'opération sure et fiable.

Avantageusement, l'entraîneur, qui constitue le mécanisme de commande du fonctionnement du grille-pain, est monté en coulissement le long d'au moins une colonne de guidage verticale liée par ses extrémités, au bâti et/ou au boîtier du grille-pain. Ce type d'agencement, bien connu dans les grille-pain en ce qui concerne le déplacement du chariot porte pain, permet d'utiliser un agencement classique d'un grille-pain à sortie par le haut pour la construction de ce type de grille-pain à sortie par le bas, et ceci à moindre frais.

Dans le même esprit, afin de conserver des briques fonctionnelles qui ont largement été optimisées et fiabilisée dans les grille-pain à sortie par le haut, l'entraîneur est maintenu en position basse contre la force de rappel d'un ressort par un second électroaimant alimenté lors de la descente de l'entraîneur.

Avantageusement, le grille-pain comporte des moyens aptes à provoquer le mouvement d'ouverture de la trappe lors de la descente de l'entraîneur et des moyens aptes à fermer et à maintenir fermée la trappe lors de sa remontée.

Une telle configuration permet d'établir le mouvement de la trappe par des actions consécutives distinctes. La première consiste à bloquer la rotation de la trappe par un électroaimant, tel que précédemment expliqué. La seconde consiste, lors de la descente de l'entraîneur, à mettre la trappe sous contrainte de rotation contre la force de maintien exercée par l'électroaimant, de façon à assurer, lorsque cesse l'alimentation de l'électroaimant, le mouvement d'ouverture de la trappe. Un tel dispositif permet de garantir l'ouverture de la trappe en fin de cycle de cuisson.

Avantageusement, le circuit électronique instaure un délai entre l'arrêt de l'alimentation du premier électroaimant et l'arrêt de l'alimentation du second électroaimant afin de maintenir la trappe en position ouverte pendant un temps suffisant pour que les tranches de pain puissent s'évacuer de la chambre de chauffe. Le délai étant contrôlé par le circuit électronique, il est reproductible et facilement modifiable lors de la fabrication du grille-pain. Ce délai sera avantageusement compris entre 0,5 seconde et 3 secondes, bien que d'autres valeurs puissent être choisies sans incidence sur la réalisation du produit.

Afin de réduire les coûts liés à la carte électronique, dans une version économique de réalisation de l'invention, le délai entre l'arrêt de l'alimentation des deux électroaimants est défini par le temps de décharge d'un condensateur chargé lors du cycle de chauffe en cours.

Selon un mode préféré de réalisation de l'invention, la trappe comporte au moins un volet monté mobile en rotation vers l'extérieur de la chambre de chauffe autour d'un axe disposé selon la longueur de la chambre de chauffe et situé sur l'un des bords dudit volet. Le mouvement de rotation de la trappe permet de limiter la largeur du grille-pain, en profitant de l'élévation nécessaire du boîtier du grille-pain au dessus du plan de travail sur lequel il est posé pour réaliser la rotation de la trappe.

D'autres caractéristiques et avantages de l'invention se dégageront de la description qui va suivre en regard des dessins annexés qui ne sont donnés qu'à titre d'exemples non limitatifs.

La figure 1 est une vue en perspective et en élévation d'un grille-pain à sortie des aliments grillés par le bas, ledit grille-pain étant figuré en position de fonctionnement, les pieds étant dépliés.

La figure 2 est une vue en perspective de la chambre de chauffe du grille-pain.

La figure 3 illustre une vue éclatée en perspective de la figure 2, où certains éléments ont été omis afin de faciliter la compréhension des différents éléments du grille-pain.

Les figures 4a et 4b représentent respectivement une vue en perspective et une vue arrière du grille-pain, dans sa position de repos, où certains éléments ont été volontairement omis.

Les figures 5a et 5b représentent respectivement une vue en perspective et une vue arrière du grille-pain, dans la position de grillage du pain, où certains éléments ont été volontairement omis.

Les figures 6a et 6b représentent respectivement une vue en perspective et une vue arrière du grille-pain, dans sa position d'ouverture de trappe en fin de grillage, où certains éléments ont été volontairement omis.

La figure 7 est une vue en perspective d'un dysfonctionnement spécifique du grille-pain, où certains éléments ont également volontairement été omis.

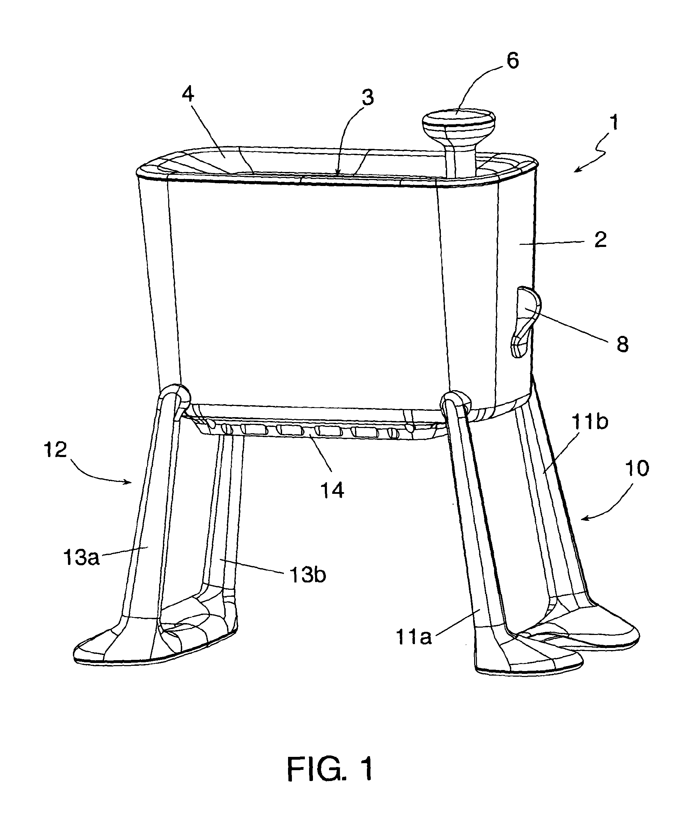

Comme le montre la figure 1, le grille-pain 1 selon l'invention comporte un boîtier 2, un toit 4 dans lequel est ménagée une ouverture 3 permettant l'introduction des tranches de pain à griller, cette ouverture étant suffisamment large pour permettre le grillage de différents types de pain.

Le grille-pain dispose également d'un bouton de commande 6 actionnant un mécanisme déclenchant un cycle de grillage et d'éjection des tranches de pain, ce bouton remontant automatiquement en fin de cuisson lors de l'éjection des tranches, tel qu'il sera expliqué plus en détail par la suite. Le grille-pain dispose également d'un bouton 8 de réglage du degré de brunissement souhaité du pain, ce bouton 8 de réglage agissant essentiellement sur le temps de grillage du pain.

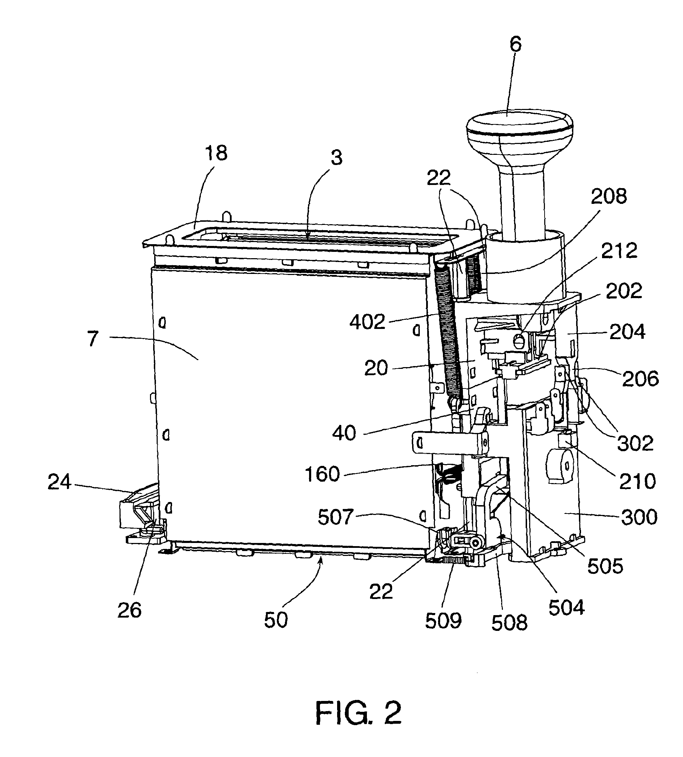

Le grille-pain selon la présente invention est un grille-pain à sortie du pain par la partie basse du grille-pain, il dispose ainsi de deux ensembles 10 et 12 de deux pieds (11 a, 11 b, 13a, 13b) repliables au moyen des quatre articulations placées sur les quatre coins inférieurs du boîtier 2. Ce dernier présente une jupe 14 de protection, cette jupe entourant une trappe 50 telle que visible sur les figures 2 et suivantes.

Les deux ensembles 10 et 12 de pieds sont repliables sur le boîtier de l'appareil, tel qu'il est détaillé dans la demande FR 2 871 041. La position dépliée, telle que présentée figure 1 est la configuration d'utilisation de l'appareil qui laisse un espace conséquent et suffisant sous le boîtier 2 du grille-pain pour la sortie des tranches de pain par la partie basse de la chambre de chauffe, une fois le cycle de grillage terminé.

La figure 2 montre la chambre de chauffe ainsi que les éléments de commande, dans la position du grille-pain à l'arrêt. Cette chambre de chauffe, délimitée par des parois verticales 7, présente notamment un rebord supérieur 18 ainsi que la trappe inférieure 50, fermée.

Une pièce principale 20, dénommée par la suite entraîneur, est montée coulissante le long de colonnes verticales 22 agencées entre les parties haute et basse du bâti du grille-pain. Cet entraîneur porte le bouton de commande 6 en partie supérieure, et comprend une masse ferritique 202, ainsi qu'un doigt 204 présentant une extrémité effilée 206 d'interaction avec un ensemble de lamelles métalliques souples 302. Ces lamelles forment un interrupteur bipolaire 303 avec des lamelles fixes adjacentes dans le circuit électrique d'alimentation des éléments chauffants et portées par une carte électronique 300 liée, en partie basse, au bâti du grille-pain.

Par ailleurs, le dispositif de commande comporte un interrupteur 210 d'arrêt immédiat du fonctionnement du grille-pain.

Sur les colonnes 22 de coulissement de l'entraîneur 20 est également montée, en coulissement entre une position haute et une position basse, une pièce 40 dénommée par la suite actionneur et comportant des éléments d'interaction pour l'ouverture / fermeture de la trappe et le centrage des grilles. L'actionneur 40 est situé sous l'entraîneur 20, au contact de ce dernier. Ces deux pièces sont maintenues en position haute, telles que représentées sur la figure 2, par deux ressorts, le ressort 208 pour l'entraîneur 20, et le ressort 402 pour l'actionneur 40. Ces deux ressorts sont positionnés entre la partie haute du bâti du grille-pain et respectivement l'entraîneur 20 et l'actionneur 40.

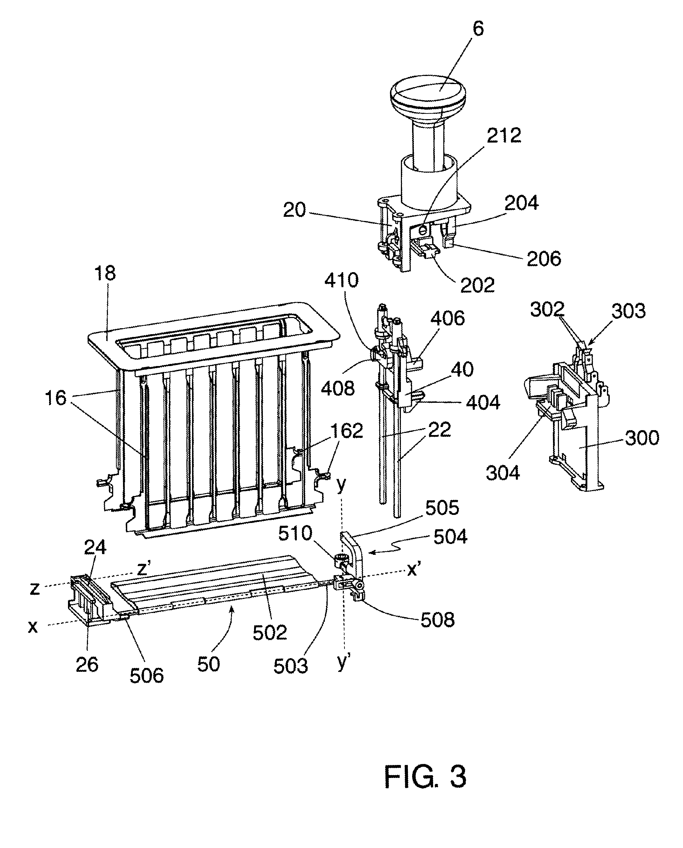

La figure 3 montre plus clairement les différents sous-ensembles composant le mécanisme de commande du grille-pain, dans une vue éclatée où n'ont été conservées, pour la chambre de grillage, que les grilles de serrage 16 des tranches de pain, le rebord supérieur 18, ainsi que la trappe 50 d'évacuation du pain grillé.

Cette vue éclatée permet de localiser l'électroaimant 304 de maintien de la masse ferritique 202 de l'entraîneur 20, cet électroaimant 304 étant porté par la carte électronique 300.

La trappe 50 comporte un volet 502 monté en rotation autour d'un axe 503 de direction x-x' correspondant sensiblement au grand côté du volet. Cet axe 503 se prolonge hors de la chambre de chauffe, d'une part sous l'actionneur 40, où il est lié à une fourche 504 verticale disposée dans la direction de coulissement de l'entraîneur, ladite fourche présentant un bras vertical 505, mais également à l'opposé, où l'axe se termine par une boucle 506. Cette dernière est en liaison avec une masse ferritique 24 mobile en rotation autour d'un axe z-z' au dessus d'un autre électroaimant 26 lié au boîtier du grille-pain. L'axe 503 est maintenu en rotation dans deux gorges 507 situées de part et d'autre de la chambre de chauffe, dont l'une est représentée figure 2.

Par ailleurs, un loquet 508 est placé sous la fourche 504, ce loquet est monté en rotation autour d'un axe vertical y-y' lié au bâti par une attache 510, la rotation de ce loquet selon un plan horizontal étant réalisée contre la force de rappel d'un ressort 509, non représenté figure 3 mais visible figure 2, ce ressort étant disposé entre le loquet et le bâti du grille-pain.

Par ailleurs, tel qu'il est connu dans le domaine des grille-pain, les grilles de serrage 16 de la chambre de chauffe sont mobiles en rotation selon un axe parallèle à l'axe x-x' et situé en partie basse des grilles, cette rotation étant provoquée par la déformation d'un ressort 160 disposé entre les deux grilles par des attaches 162.

L'actionneur 40 comporte, en partie basse, un crochet 404 en forme de triangle en présentant une partie plane horizontale et une partie en biseau formant une rampe.

En partie centrale, l'actionneur 40 porte, d'une part côté commande, un doigt d'actionnement 406 de la fourche 504, et d'autre part côté chambre de chauffe, une pièce 408 de sollicitation du ressort 160 de serrage des grilles 16. Les deux éléments 406 et 408 sont reliés l'un à l'autre par un axe 410 monté dans une gorge et susceptible de pivoter selon un axe horizontal, sensiblement parallèle à l'axe x-x'.

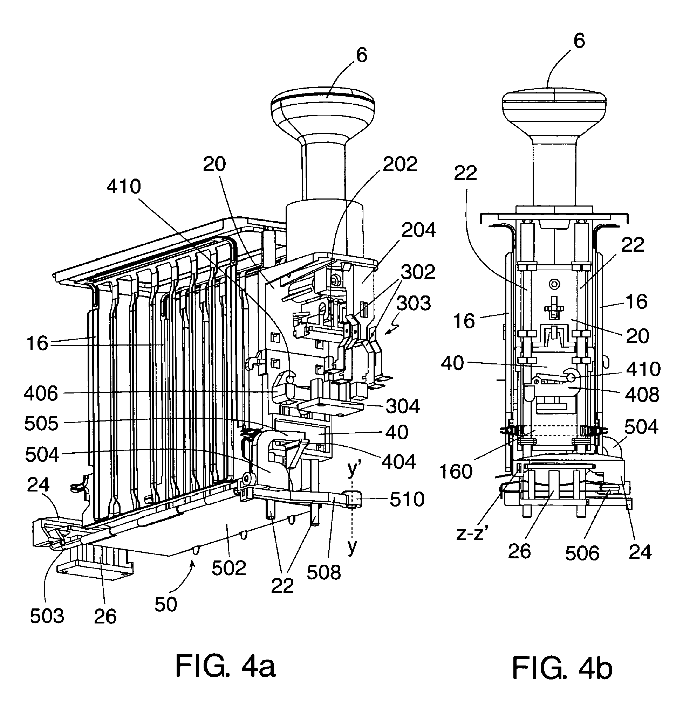

Lorsque l'utilisateur désire se servir de son appareil, ce dernier est initialement en position de repos, tel que présenté aux figures 4a et 4b, l'entraîneur 20 et l'actionneur 40 étant en position haute, soumis au rappel des ressorts respectifs 208 et 402. Dans cette position, le crochet 404 maintient la fourche dans une position donnée, que l'on dénommera « verticale », où le bras principal 505 de la fourche 504 est horizontal, positionnant ainsi le volet 502 de la trappe 50 en position fermée, le volet 502 fermant la chambre de chauffe. Le mouvement de rotation de la fourche est également empêché par le loquet 508 sur lequel prend appui la base de la fourche 504.

Lorsque l'utilisateur, après avoir introduit une ou plusieurs tranches de pain dans la chambre de chauffe, par l'ouverture 3, abaisse le bouton de commande 6 et donc les deux pièces 20 et 40, l'interrupteur bipolaire 303 du circuit d'alimentation de la carte électronique se ferme sur une première partie de la course verticale des pièces 20 et 40, par interaction de la rampe reliant l'extrémité effilée 206 du doigt 204 avec la base de ce dernier, sur les lamelles 302. Ceci provoque la mise sous tension des deux électroaimants 304 et 26 ainsi que celle des éléments chauffants.

L'électroaimant 26 attire et maintient fermement la masse ferritique 24, immobilisant la boucle 506 et interdisant donc au volet 502 de la trappe 50, initialement fermé, de pouvoir s'ouvrir.

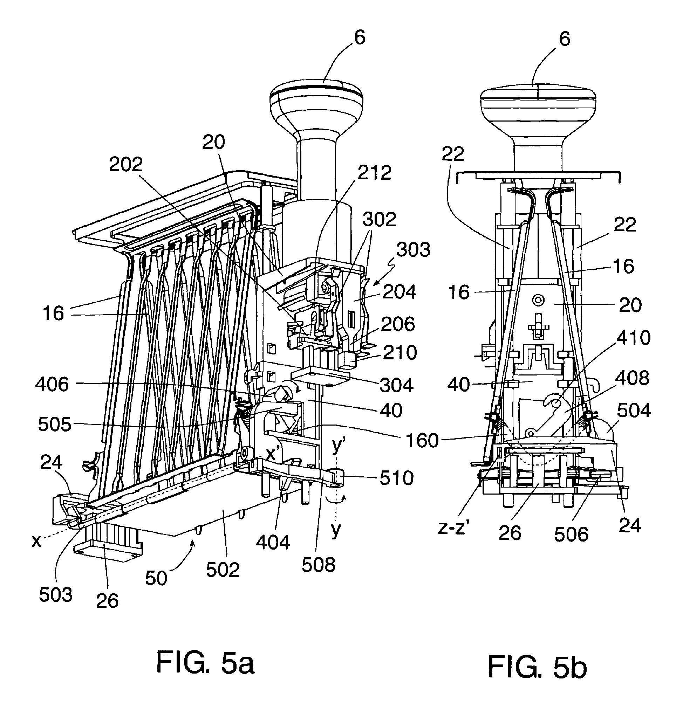

Dans ce premier mouvement de descente du bouton de commande 6, l'électroaimant 304 est, certes, alimenté, mais la masse ferritique 202 est encore trop éloignée pour être maintenue par ledit électroaimant. Ceci est réalisé par un déplacement supplémentaire de l'organe 6 par l'utilisateur, qui aboutit à la configuration des figures 5a et 5b, où la masse ferritique 202 est au contact de l'électroaimant 304, permettant de maintenir l'entraîneur 20 en position basse, contre la force de rappel du ressort 208.

Par ailleurs, durant ce mouvement de descente supplémentaire, le doigt d'actionnement 406 entre en contact avec le bras principal 505 de la fourche 504 immobilisée indirectement par l'électroaimant 26, provoquant la rotation du doigt 406 autour de l'axe 410, selon la flèche indiquée.

Cette rotation entraîne la rotation, côté chambre de chauffe, de la pièce 408 qui, tel qu'il est bien visible sur la figure 5b, déforme par son extrémité, le ressort 160, provoquant le pivotement des grilles 16 et le serrage des tranches de pain.

La déformation du ressort 160 provoque en retour, par la force de rappel résultante, un effort du doigt d'actionnement 406 sur le bras principal 505 de la fourche, afin de contraindre cette dernière à pivoter dans le sens de l'ouverture du volet lorsque l'actionneur passe de sa position haute à sa position basse.

De plus, la rampe du crochet 404, en partie basse de l'actionneur, provoque la rotation du loquet autour de l'axe y-y', contre la force de rappel du ressort 509, mouvement indiqué par la flèche au niveau de l'axe y-y'.

Dans cette position, seul l'électroaimant 26 maintient alors le volet 502 de la trappe 50 en position fermée, contre l'effort exercé par le doigt d'actionnement 406 sur le bras 505 de la fourche 504.

Il est à noter que cette mise en contrainte de la trappe n'est pas forcément nécessaire à l'ouverture de ladite trappe, cette force étant en fait complémentaire à la force de gravité, afin de réaliser l'ouverture de la trappe, la gravité pouvant à elle seule suffire. Dans ce cas de figure, la force de contrainte peut être annulée en positionnant le point d'appui du doigt 406 à la verticale de l'axe x-x'.

La configuration présentée aux figures 5a et 5b correspond à la position des différents éléments lors du cycle de grillage qui se poursuit pendant un temps correspondant au degré de brunissage souhaité.

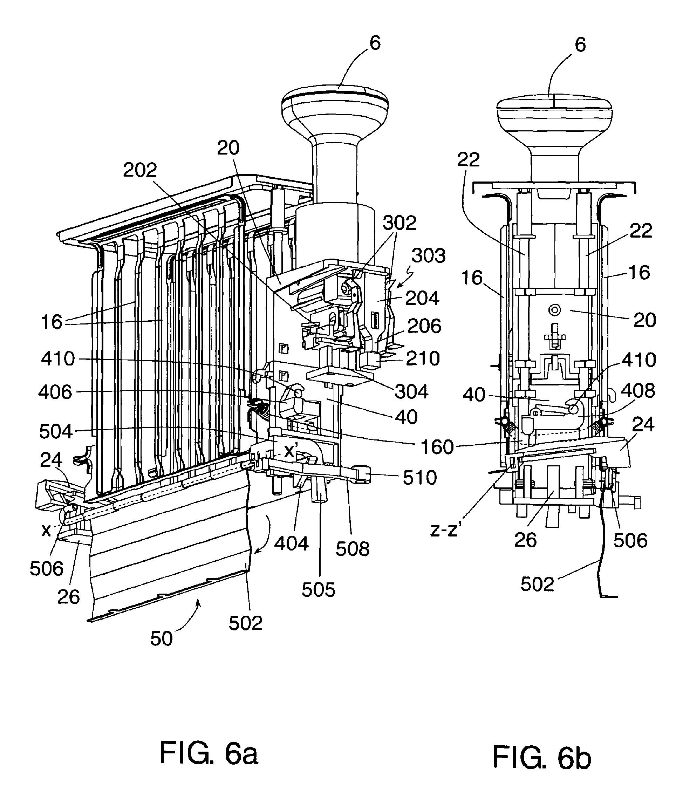

En fin de cycle de grillage, tel que représenté figures 6a et 6b, le circuit électronique de commande stoppe l'alimentation de l'électroaimant 26, libérant ainsi la masse ferritique 24.

Le ressort 160 de centrage des grilles provoque alors la rotation de la pièce 408 pour reprendre son état d'équilibre, induisant, côté commande une même rotation du doigt d'actionnement 406 qui, à son tour, appuie, pour reprendre sa position d'origine, sur le bras principal 505 de la fourche 504, provoquant sa rotation dans le sens horaire vu de la figure 5a, ainsi que la rotation du volet 502. Cette rotation du volet, d'un angle voisin de 90°, correspondant à l'ouverture de la trappe, permet l'évacuation des tranches de pain hors de la chambre de chauffe, sous le grille-pain.

Cette rotation du volet entraîne la rotation de la boucle 506 qui tend alors à éloigner la masse ferritique 24 de l'électroaimant 26.

Par la suite, c'est-à-dire après 1 à 2 secondes, le circuit électronique de commande stoppe l'alimentation de l'électroaimant 304, libérant la masse ferritique 202 et donc l'entraîneur 20 qui peut alors remonter vers une position haute, sous l'effet de rappel du ressort 208. Cette remontée permet l'ouverture de l'interrupteur 303, les lamelles 302 n'étant plus sollicitées par le doigt 204, et donc l'arrêt des éléments chauffants.

En variante de réalisation, il pourrait être prévu d'ouvrir le circuit d'alimentation en même temps que la trappe, afin d'arrêter les éléments chauffants. La décharge d'un condensateur, chargé lors du cycle de chauffe, pourrait alors permettre de réaliser le délai entre l'arrêt de l'alimentation des deux électroaimants.

Dans le cas de figure présenté, le délai entre l'arrêt de l'alimentation des deux électroaimants est réalisé par un timer d'un circuit intégré de la carte électronique. Dans cette configuration, un relais peut être prévu pour arrêter l'alimentation des éléments chauffants lors de l'ouverture de la trappe.

Dans le même temps, l'actionneur 40 peut également retourner vers une position haute de repos, sous l'effet de rappel du ressort 402. Durant ce trajet, le crochet 404, positionné sous le bras 505, entre en prise avec ce dernier et provoque la rotation de la fourche 504 dans le sens anti-horaire pour la ramener en position dite « verticale », provoquant par là même la fermeture du volet 502 de la trappe 50.

En fin de rotation, sous l'effet de la force de rappel du ressort 509, le loquet 508 de trappe glisse sous la fourche 504. La trappe est de nouveau verrouillée mécaniquement.

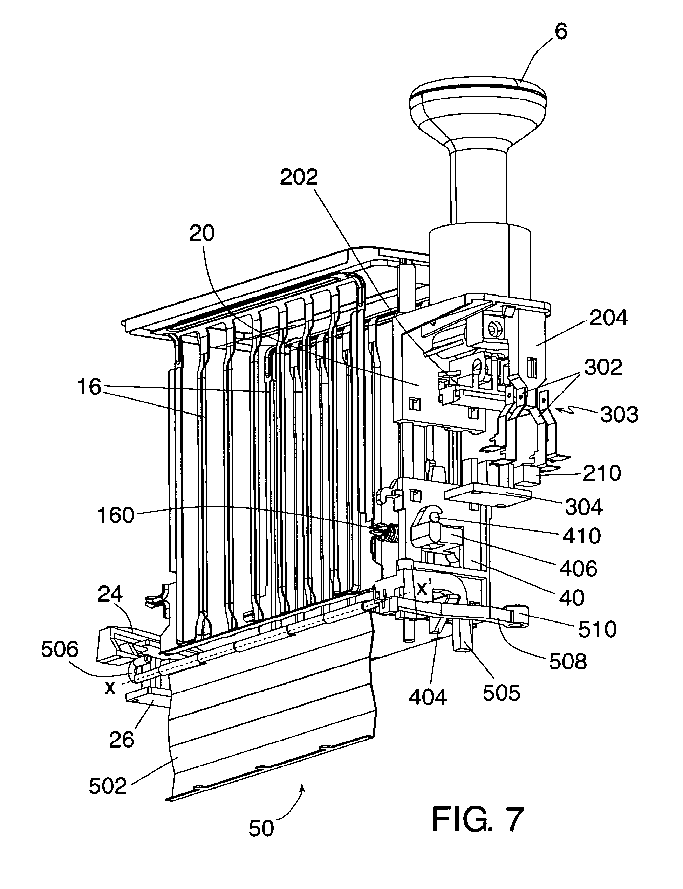

Il est important de noter que le mouvement de l'entraîneur 20 est indépendant de l'état de l'actionneur 40 puisque aucune liaison mécanique ne lie l'entraîneur 20 et l'actionneur 40. Ainsi, l'entraîneur 20 coulisse obligatoirement vers le haut à la fin d'un cycle de chauffe, arrêtant l'alimentation des éléments chauffants, et ceci quel que soit l'état du mécanisme d'ouverture de trappe. Une telle configuration est illustrée figure 7, où l'entraîneur est en position haute, en ayant, lors de sa remontée, stoppé notamment l'alimentation de l'électroaimant, alors que la trappe est restée bloquée en position ouverte.

Cet arrêt de l'alimentation des éléments chauffants par la remontée de l'entraîneur 20 se produit également en cas de blocage de la trappe en position fermée.

Un tel dispositif constitue ainsi avantageusement un dispositif « anti-coincement » également dénommé « anti-jam » dans la profession, dispositif qui assure donc la coupure de l'alimentation des éléments chauffants, et ce même si les tranches de pain restent bloquées à l'intérieur de la chambre de chauffe.

De plus, en cas de basculement du produit, une information donnée par un interrupteur à bille (ouverture ou fermeture d'un contact) provoque l'arrêt du cycle, commandé par le microcontrôleur. Le produit couché n'empêche pas le mouvement de rappel du chariot vertical et l'ouverture de l'interrupteur bipolaire 303.

Il peut également être prévu un dispositif d'arrêt immédiat du fonctionnement du grille-pain, par exemple en cas de sur-grillage du pain, où l'utilisateur décide alors d'arrêter le grillage du pain. Ce dispositif est assuré par un interrupteur 210, de type micro-switch, bien visible figure 2, ledit interrupteur étant porté par la carte électronique 300. Cet interrupteur est situé dans le prolongement de la course du doigt 204, de sorte que ce doigt soit disposé à quelques millimètres de cet interrupteur, lors du cycle de grillage, tel qu'il est bien visible figure 5a.

Par ailleurs, la masse ferritique 202 est agencée sur la pièce 20 dans une lumière 212 de forme oblongue, permettant un léger déplacement relatif vertical de la pièce 20 par rapport à la masse ferritique.

Ainsi, lors d'un cycle de grillage, la pièce 20 est maintenue en position basse par l'attrait de la masse ferritique 202 par l'électroaimant 304. Toutefois, en actionnant vers le bas l'organe de commande 6, à la manière d'un arrêt d'urgence, l'utilisateur peut faire coulisser la pièce 20 de quelques millimètres relativement, à la masse ferritique, déplaçant ainsi le doigt 204 dont l'extrémité peut actionner l'interrupteur 210 qui met fin au cycle de grillage et engendre les actions d'ouverture de trappe et de remontée de l'entraîneur et de l'actionneur.

La présente invention n'est pas limitée au mode de réalisation présenté, et englobe également tous les équivalents techniques ainsi que les variantes structurelles de réalisation.

En particulier, le mouvement de la trappe, présenté en rotation peut être obtenu par deux demi trappes. Il peut également être prévu en translation, par des éléments de renvoi mécanique ou par un dispositif de poulie(s).

Par ailleurs, bien que le dispositif d'anti-jam constitue un avantage intéressant, dans une version économique de réalisation, l'entraîneur et l'actionneur peuvent n'être qu'une seule et même pièce, l'actionneur étant une extension physique de l'entraîneur. Une telle configuration simplifie le dispositif de commande, en supprimant notamment une pièce et un ressort de rappel.

## Revendications

1. Grille-pain (1) comportant un bâti définissant au moins une chambre de chauffe ouverte en partie supérieure et délimitée en partie basse par une trappe mobile (50) entre une position fermant la chambre de chauffe et une position d'ouverture de la chambre de chauffe, des éléments chauffants disposés à proximité de la chambre de chauffe, un entraîneur (20) mobile hors de la chambre de chauffe entre une position haute de repos et une position basse de grillage du pain, la trappe étant en position fermée lorsque l'entraîneur est en position haute de repos correspondant à l'arrêt du grille-pain, l'entraîneur (20) comportant une extension (204, 206) permettant de fermer le circuit d'alimentation électrique des éléments chauffants via des moyens électroniques (300) lors du passage de sa position haute à sa position basse, **caractérisé en ce que** le grille-pain (1) comporte un électroaimant (24, 26) alimenté lors de la descente de l'entraîneur et s'opposant, lorsque alimenté, à l'ouverture de la trappe (50), et **en ce qu'**un circuit électronique commande l'arrêt de l'alimentation de cet électroaimant (24, 26) en fin de cycle de grillage afin de permettre le mouvement d'ouverture de la trappe (50) pour l'évacuation des tranches de pain par le bas du grille-pain (1).

2. Grille-pain (1) selon la revendication précédente, **caractérisé en ce que** l'entraîneur (20) est monté en coulissement le long d'au moins une colonne de guidage (22) verticale liée par ses extrémités, au bâti et/ou au boîtier (2) du grille-pain (1).

3. Grille-pain (1) selon l'une des revendications précédentes, **caractérisé en ce que** l'entraîneur (20) est maintenu en position basse contre la force de rappel d'un ressort (208) par un second électroaimant (202, 304) alimenté lors de la descente de l'entraîneur (20).

4. Grille-pain (1) selon la revendication précédente, **caractérisé en ce qu'**il comporte des moyens (404, 406, 408, 410) aptes à provoquer le mouvement d'ouverture de la trappe (50) lors de la descente de l'entraîneur (20) et des moyens (404, 402, 508, 509) aptes à fermer et à maintenir fermée la trappe (50) lors de la remontée de l'entraîneur (20).

5. Grille-pain (1) selon la revendication précédente, **caractérisé en ce que** le circuit électronique instaure un délai entre l'arrêt de l'alimentation du premier électroaimant (26) et l'arrêt de l'alimentation du second électroaimant (304) afin de maintenir la trappe (50) en position ouverte pendant un temps suffisant pour que les tranches de pain puissent s'évacuer de la chambre de chauffe.

6. Grille-pain (1) selon la revendication précédente, **caractérisé en ce que** le délai entre l'arrêt de l'alimentation des deux électroaimants (26, 304) est compris entre 0,5 seconde et 3 secondes.

7. Grille-pain (1) selon l'une des revendications 5 ou 6, **caractérisé en ce que** le délai entre l'arrêt de l'alimentation des deux électroaimants (26, 304) est défini par le temps de décharge d'un condensateur chargé lors du cycle de chauffe en cours.

8. Grille-pain (1) selon l'une des revendications précédentes, **caractérisé en ce que** la trappe (50) comporte au moins un volet (502) monté mobile en rotation vers l'extérieur de la chambre de chauffe autour d'un axe (503) disposé selon la longueur de la chambre de chauffe et situé sur l'un des bords dudit volet (502).

9. Grille-pain (1) selon la revendication précédente, **caractérisé en ce que** l'axe (503) de rotation du volet (502) de la trappe (50) s'étend de part et d'autre de la chambre de chauffe et comporte un élément d'interaction (506) avec une masse ferritique (24) en relation magnétique avec le premier électroaimant (26) et tendant à éloigner ladite masse ferritique (24) de l'électroaimant (26) lors de la rotation du volet (502) de la trappe (50) de sa position fermée vers sa position ouverte.

10. Grille-pain (1) selon la revendication précédente, **caractérisé en ce qu'**il comporte une fourche (504) présentant un bras principal (505), ladite fourche (504) étant liée à l'axe de rotation (503) du volet (502) de la trappe (50) hors de la chambre de chauffe, dans la direction de coulissement de l'entraîneur.

11. Grille-pain (1) selon la revendication précédente, **caractérisé en ce que** les moyens aptes à provoquer le mouvement d'ouverture de la trappe (50) lors de la descente de l'entraîneur (20) consistent en un doigt (406) porté par un actionneur (40) monté mobile en coulissement le long d'au moins une colonne de guidage (22) verticale liée par ses extrémités au bâti et/ou au boîtier (2) du grille-pain (1) entre une position haute et une position basse contre la force de rappel d'un ressort (402), ledit actionneur (40) étant disposé sous l'entraîneur (20), au contact de ce dernier, le doigt (406) étant susceptible d'exercer un effort sur le bras principal (505) de la fourche (504) afin de contraindre cette dernière à pivoter dans le sens de l'ouverture du volet (502) lorsque l'actionneur (40) passe de sa position haute à sa position basse.

12. Grille-pain (1) selon la revendication précédente, **caractérisé en ce que** les moyens aptes à fermer et à maintenir fermée la trappe (50) lors de la remontée de l'entraîneur (20) consistent en un crochet (404) porté par l'actionneur (40), ledit crochet (404) étant apte à venir en prise avec le bras principal (505) de la fourche (504), afin de contraindre cette dernière à pivoter dans le sens de la fermeture du volet (502) de la trappe (50) lorsque l'actionneur (40) passe de sa position basse à sa position haute.

13. Grille-pain (1) selon l'une des revendications 11 ou 12, **caractérisé en ce que** l'actionneur (40) est une extension physique de l'entraîneur (20).

14. Grille-pain (1) selon l'une des revendications 11 ou 12, **caractérisé en ce que** l'actionneur (40) et l'entraîneur (20) sont deux pièces distinctes possédant chacune un ressort de rappel.

15. Grille-pain (1) selon l'une des revendications 10 à 14, **caractérisé en ce qu'**il comporte un loquet (508) mobile disposé sous la fourche (504) et bloquant la rotation de la fourche (504) dans sa position de repos, ledit loquet (508) étant écarté de sa position de repos contre la force de rappel d'un ressort (509) par le crochet (404) de l'actionneur (40), lorsque ce dernier est dans sa position basse, autorisant ainsi le pivotement de la fourche (504).
